# EUROPEAN PATENT APPLICATION

(11) **EP 2 999 067 A1**
(43) Date of publication of application: **23.03.2016**
(21) Application number: 15185943.6
(22) Date of filing: 18.09.2015
(51) Int. Cl.: H02B 1/50

(54) **UNDERGROUND STREET CABINET**

(30) Priority: 18.09.2014 IT RM20140530
(71) Applicant: C.I.S. Sud s.r.l., 00040 Ariccia (RM) (IT)
(72) Inventor: BERNARDINI, Giuseppe, 00040 IT (IT)
(74) Representative: Santi, Filippo

(57) **Abstract**

The present invention concerns a retractable street cabinet comprising an outer container (1) adapted to be underground, provided with openings (2) and with a lid (7), which closes the upper portion of said outer container (1), inside said outer container (1) being housed one or more functional apparatuses, together with their power supply accessories, which are arranged on a pullout structure (5) by sliding through said upper portion.

## Description

The present invention concerns a pullout street cabinet.

The invention relates to the field of installations relating to distribution networks of electricity, telephone, gas/water, traffic lights and in general all management systems designed to be placed outdoors.

More particularly, the present patent application refers to the cabinets (also said cabinet) currently used in the implemental development of the telephone network using the so-called Fiber To The Cabinet (FTTCa) transmission system, but the solution proposed according to the present invention can be easily adapted to cabinets of distribution networks of different types, such as those listed in the previous paragraph.

It is known that, at present, the telephone network between the telephone exchange, the center of gravity of a housing area, and the users connected to it, is constituted by a primary network and a secondary network made of copper. The primary network combines the exchange with a street cabinet, called line splitting cabinet (often referred to simply by the acronym AR), while the secondary network combines the AR with the users.

In the so-called Fiber To The Cabinet (FTTCa) transmissive system, the primary network is made of optical fiber, by replacing the copper cable, which was used above, with the optical cable, while the secondary network remains of copper.

The FTTCa transmission system allows to obtain a better bandwidth as it reduces the length of the used copper network.

In this transmission system, the cabinet becomes an active line splitting street locker (or cabinet), where incoming optical fibers are terminated and copper pairs depart, but in which the transmission equipment and all the various accessories for their power supplying are also contained.

It follows that the increased need for replacement of old line splitting cabinets with these new active street cabinets, or even the installation of new street cabinets, becomes increasingly difficult given the increasing difficulty of obtaining permissions that must be issued by the entities that own the streets.

Unfortunately, in fact, up to now the task of installation of street cabinets was very improvised and usually little cured, especially as regards the insertion of the cabinets in a manner compatible with the environment in which they are installed. Consequently, it is possible to find street cabinets put against the walls of buildings, or in an isolated location on the edge of the sidewalks, on the end of the street.

Moreover, often the image that results is that of conspicuous points with densification of objects, of different shape and size.

In addition to this the bad image of the decay in time of materials and vandalism covering artifacts with writings and posters.

The resulting environmental impact is significant, giving rise to a feeling of carelessness maintenance and general deterioration, which can not be underestimated.

In this context it is included the solution according to the present invention, which aims to realize and install pullout street cabinets, capable of solving all the problems of visual impact and environmental insertion of the cabinets themselves.

The aim of the present invention is therefore to provide pullout street cabinets that can overcome the limits of street cabinets of the prior art and obtain the technical results previously described.

A further object of the invention is that said street cabinets can be manufactured with substantially low costs, both as regards production costs and as regards operating costs.

Another object of the invention is to propose pullout street cabinets that are simple, safe and reliable.

Therefore it is a specific object of the present invention a pullout street cabinet comprising an outer container adapted to be interred, provided with openings and with a lid, which closes the upper portion of said outer container, inside said outer container being housed one or more functional apparatuses, together with their power supply accessories, which are arranged on a pullout structure by sliding through said upper portion.

Preferably, according to the invention, said pullout structure is integral with said lid and comprises a limit switch mechanism.

In particular, according to the present invention, on the outer surface of said outer container it is present at least one outer section bar, arranged perpendicular to the direction of the buoyant force exerted on said outer container by a fluid that may occupy the space surrounding said outer container.

Still, according to the invention, said lid has a hydraulic seal, arranged in correspondence of the upper peripheral edge of said outer container.

Furthermore, according to the invention, said street cabinet may comprise a surrounding bead placed on the top of said outer container and above which is arranged a manhole.

In particular, according to the present invention, said pullout structure can be a rack for housing telephone transmission equipment.

Preferably, according to the invention, said openings are arranged in the lower part of said outer container and said pullout structure has a height lower than that of said outer container, leaving a free space on the bottom of said outer container.

Moreover, according to the present invention, on the outer surface of said outer container can be arranged a plurality of cooling panels by thermal dissipation.

In particular, always according to the invention, said pullout street cabinet may comprise an automated handling system, comprising a threaded rod arranged vertically in the center of said outer container and coupled to the center of a base of said outer container, an internally threaded ferrule, disposed at the center of a base of said pullout structure and coupled to said base with possibility of rotation, and a pipe, integral with said ferrule and inside which it is defined a seat for housing said threaded rod, said pipe being coupled, with possibility of rotation, to said lid and being integral with an extremity, arranged externally to said lid.

Finally, according to the present invention, said pullout street cabinet may include a locking device, integral with said pipe, and provided with a plurality of mechanical spring elements coupled to the corresponding seats of said threaded rod.

It is clear the effectiveness of the street cabinet of the present invention, which allows to have an economical solution in terms of installation and is technically valid for the following three main aspects: location of installation always possible, security against vandalism guaranteed, no environmental impact.

The present invention will be now described, for illustrative but not limitative purposes, according to its preferred embodiment, with particular reference to the figures of the accompanying drawings, in which:
- Figure 1 shows a perspective view of a pullout street cabinet according to the present invention,
- Figure 2 shows a perspective view of a first embodiment of a rack of the pullout street cabinet of Figure 1,

- Figure 3 shows a perspective view of the pullout street cabinet of Figure 1 and of an overstanding manhole,
- Figure 4 shows an elevational view of the pullout street cabinet of Figure 1 and in transparency of the overstanding manhole of Figure 3,
- Figure 5 shows a perspective view of the pullout street cabinet of Figure 1, with the overstanding manhole of Figure 3 in the open position,
- Figure 6 shows an elevational view of the pullout street cabinet of Figure 1, with the rack of Figure 2 in the extraction position,
- Figure 7 shows an elevational view of a second embodiment of the rack of the pullout street cabinet of Figure 1, and
- Figure 8 shows a sectional view of a detail of an automated handling system of the rack of Figure 7.

Referring to the figures, a pullout street cabinet according to the present invention comprises: an outer container 1, to be installed below ground level, provided with openings 2 for cable entry from the network, and with a lid 7, placed on the upper part of the outer container 1. Inside the outer container 1 is placed a rack 5, or a shelf for the physical installation of all the necessary transmission equipment and all the various accessories for its power supply. The rack 5 is realized in such a way to be extracted from the outer container 1 by means of the simple lifting of the lid 7.

More particularly, the outer container 1 may be made of watertight stainless steel. The openings 2 for entry and/or exit of the cables are arranged in the lower part of the outer container 1. On the outer surface of the outer container 1 are present cooling panels 3.

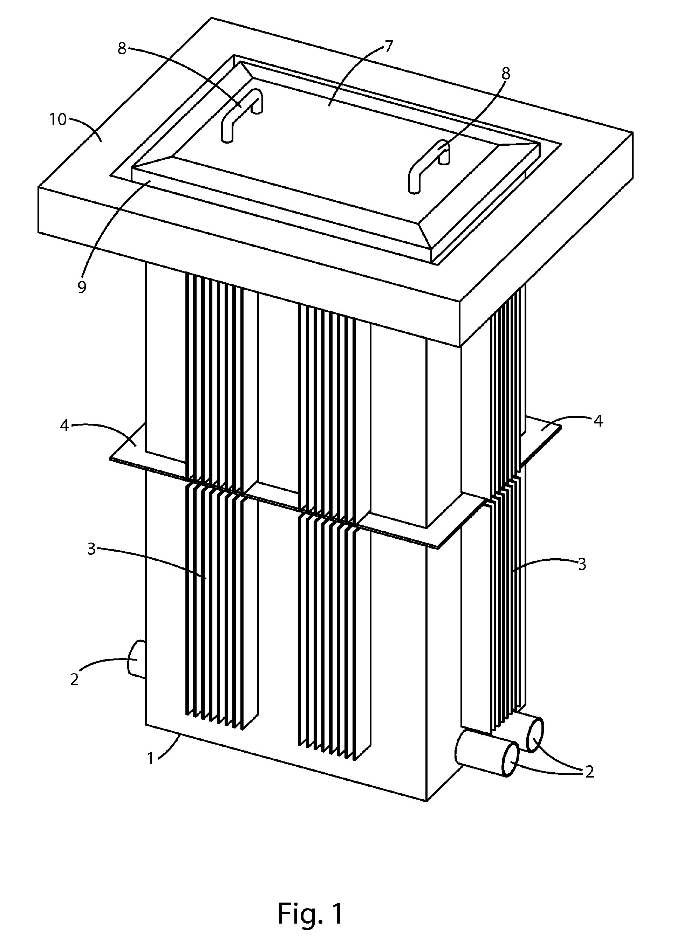

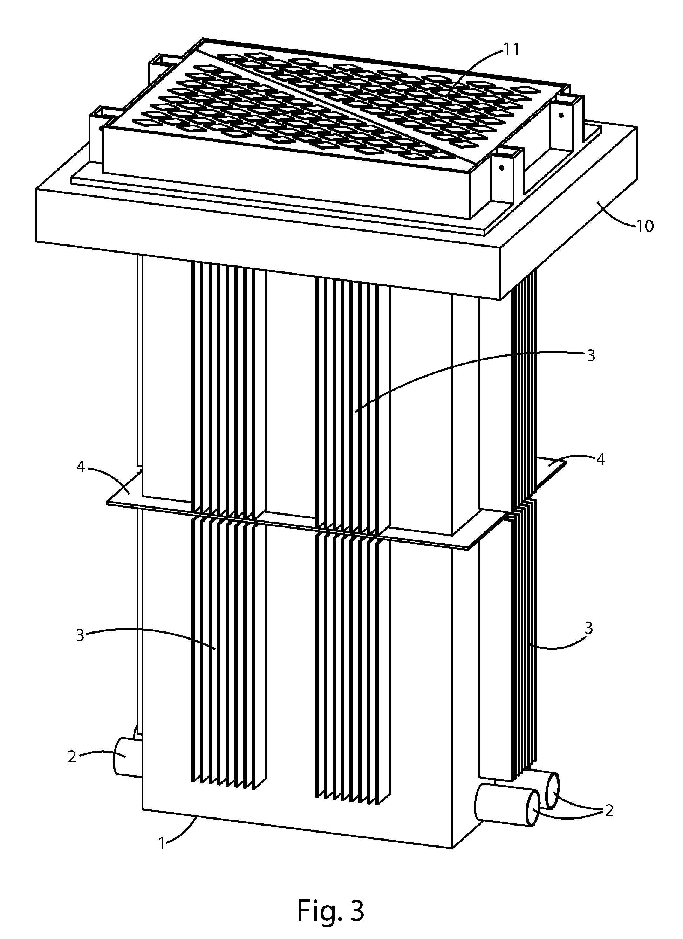

In the embodiment shown by way of example in Figures 1, 3-6, the outer container 1 has a parallelepiped shape, and is equipped, on each of the two longer external sides, with two cooling panels 3 and on each of the two shorter external sides, with a cooling panel 3. The cooling panels 3 are provided with fins for heat dissipation. Such fins may be made of Al 6082 aluminum.

On each of the four sides of the outer surface of the outer container 1, at half the height of the outer container 1, is also present an outer section bar 4, as a reinforcement for the walls. The outer section bar 4 also helps to prevent slippage of the container from its seat inground, which could be favored by possible prevalence of hydraulic pressure to the top that is to occur within the ground.

The rack 5, inside the outer container 1, has a shape and measurements such that its four outside edges can slide on the four inner corners of the outer container 1, for the entire vertical length of the same. The rack 5 has a height lower than that of the outer container 1, so that in the closed and/or rest position on the bottom of outer container 1 is present an internal space, free and available for the containment and the elongation of cables. Furthermore, the rack 5 is secured to the lower part of the closing lid 7.

The lid 7 has two handles 8, which serve to extract more easily the rack 5.

Also, the lid 7 has, formed on the perimeter of its lower base, a seat 9, where is inserted a gasket that covers and closes the upper peripheral edge of the container 1, making it watertight in the closed position of the same.

It is an integral part of the pullout street cabinet a surrounding curb 10 of reinforced concrete, such as those normally used to support cast iron manhole covers of common cabinets and/or wells.

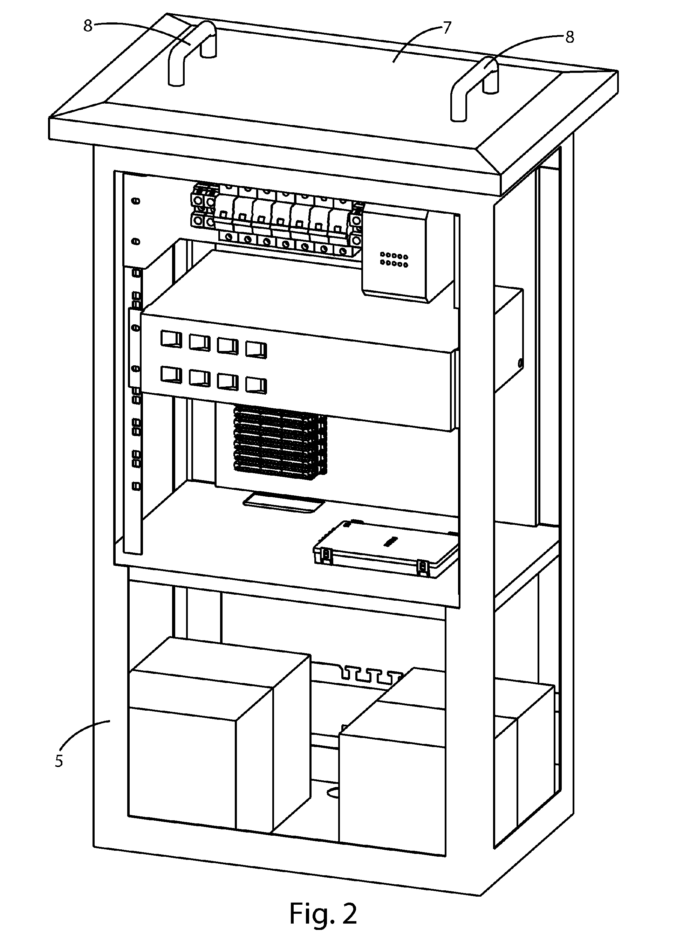

The rack 5 exactly reproduces the traditional containment and the internal arrangement of the objects, like that of a street cabinet, as shown in Figure 2.

Above the curb 10 of concrete it is installed on a manhole 11, which can have a minimum size of 70x50 cm of commercial use. The function of the manhole is to provide a support to external loads. The flow configuration of the manhole can be different depending on the location of the installation of the street pullout cabinet according to the present invention, both on the head of the street or on the sidewalk.

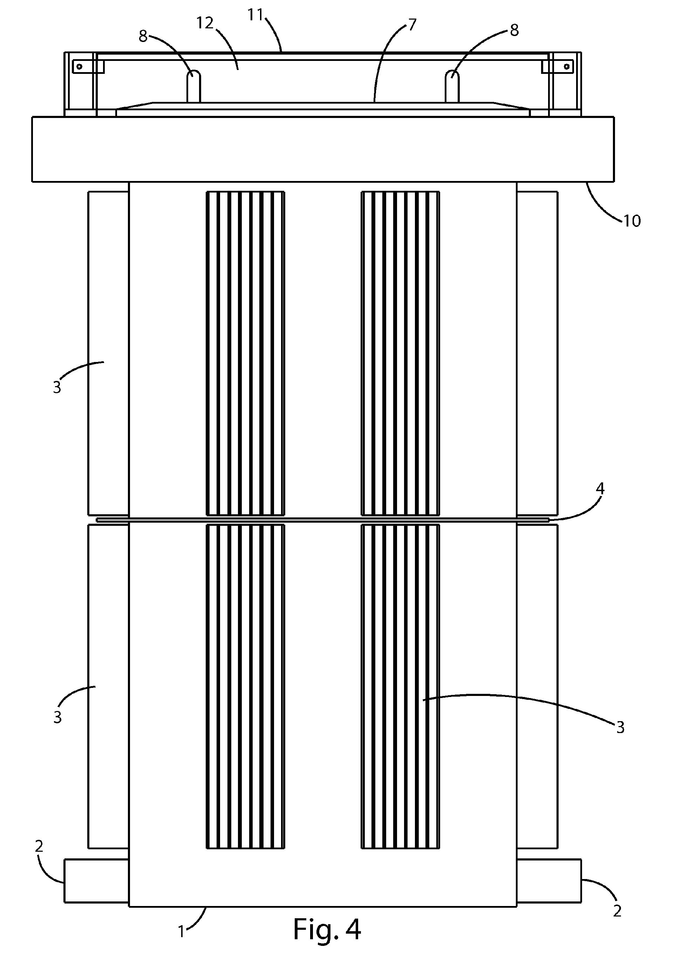

The manhole 11, together with its frame, encloses a space 12 (Fig. 4) with which it makes available the maneuverability of the lid 7 of the rack 5.

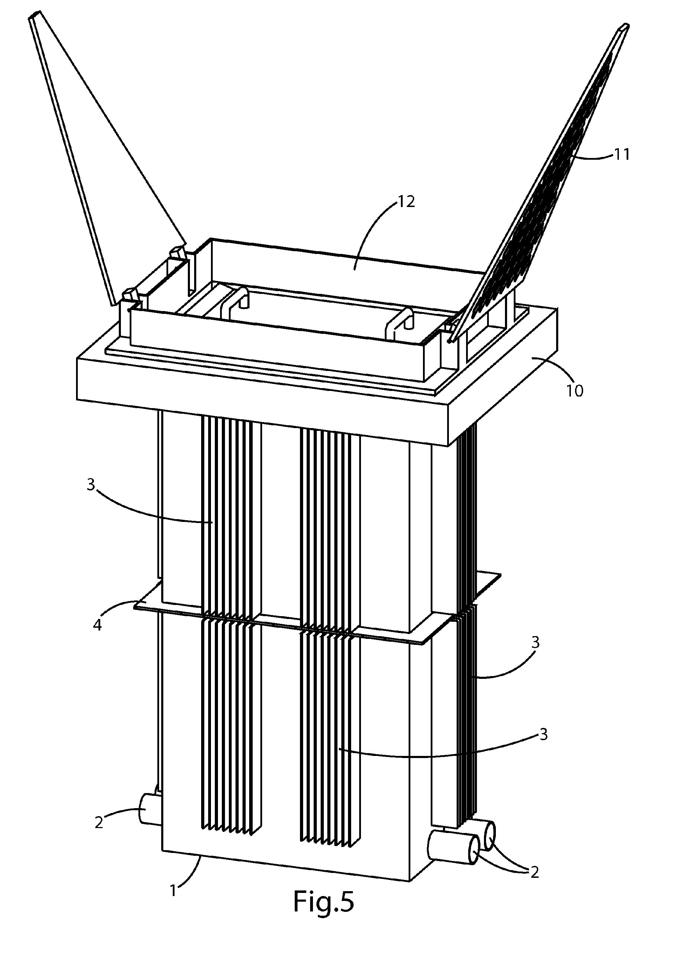

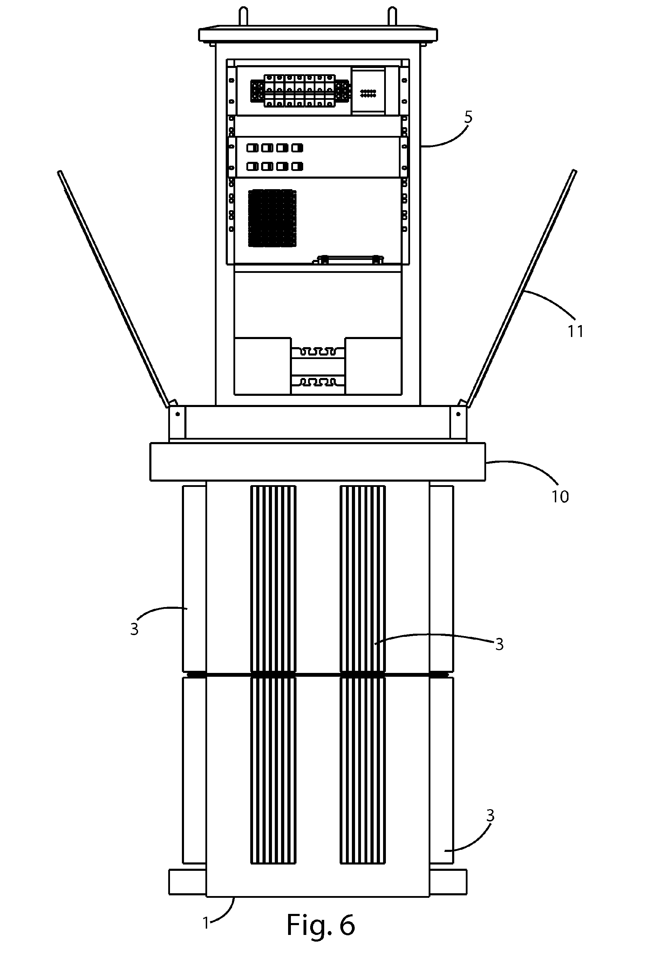

With regard to the use of pullout street cabinet according to the present invention, the access is normally done in a simple way, by opening the manhole 11, as shown in Fig. 5. Through the two handles 8 of the lid 7, it is possible to lift the rack 5 for its entire height up to a stop contact, which intervenes mechanically in an automatic way (Fig. 6).

On first installation, the rack 5 can be removed completely for better work.

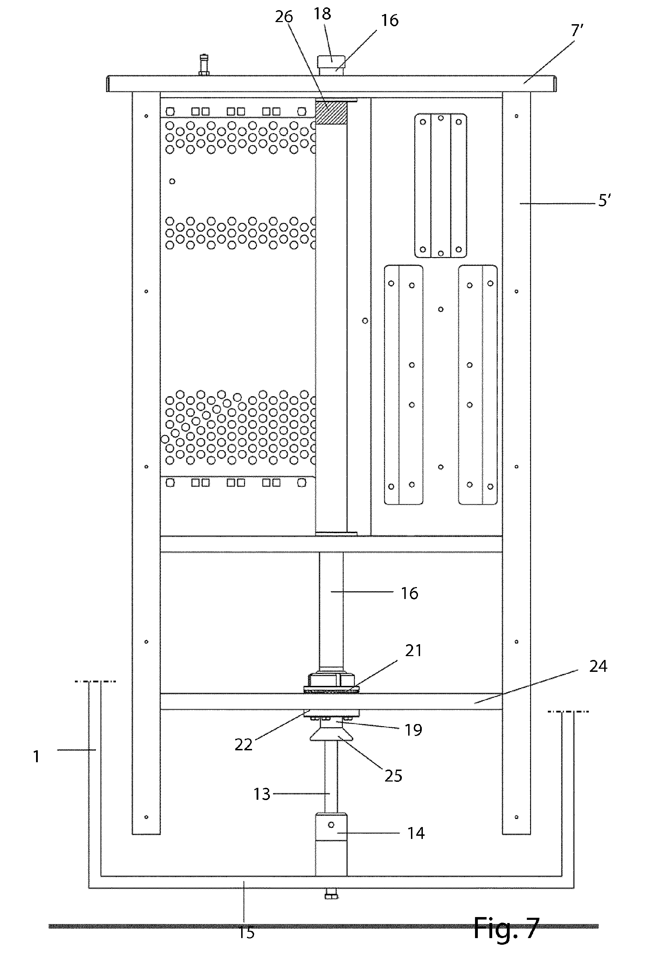

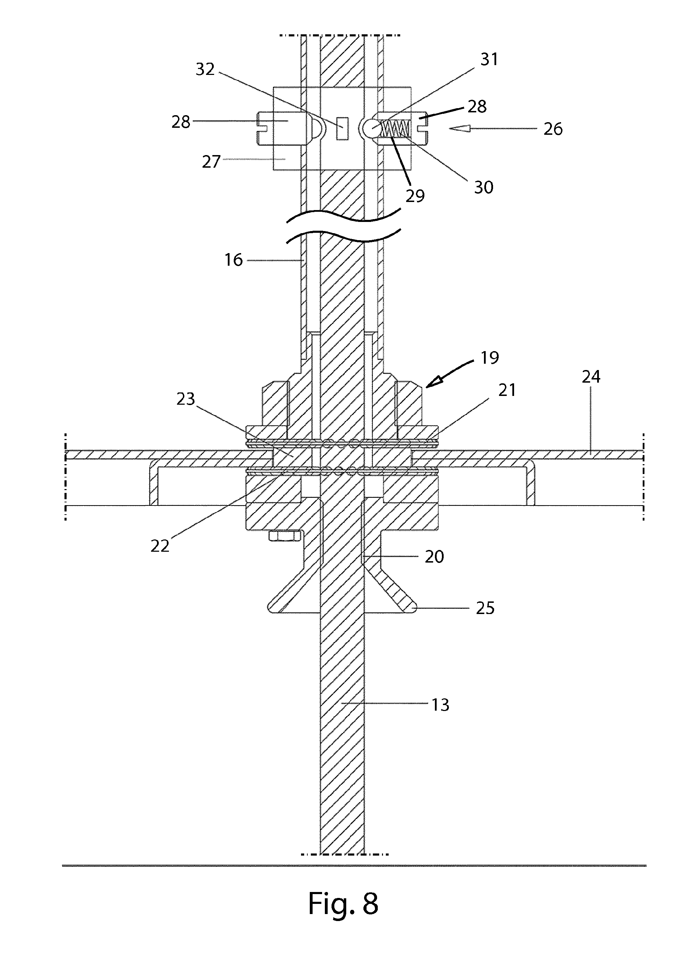

According to a second embodiment of the pullout street cabinet of the present invention, shown with reference to Figures 7 and 8, the rack 5 is provided with an automated handling system, applicable in all cases, but particularly useful in the case of a heavy rack 5'.

The automated handling system is constituted by a threaded rod 13 having reduced pitch, for easier maneuverability of use. The threaded rod 13 is locked, for example by means of a bayonet coupling 14, to the inner center of the base 15 of the outer container 1. Moreover, the threaded rod 13 has a length such as to run over the whole height of the outer container 1.

The threaded rod 13 is inserted into a pipe 16, arranged vertically at the center of the rack 5' and coupled to the rack 5 'itself, with possibility of rotation around its vertical axis.

The pipe is accessible from the outside of the lid 7' of the outer container 5' through an extremity 18 with a polygonal (eg square) contour. On the extremity 18 can be applied a crank and/or an electric screwdriver, to conduct the pipe 16 in rotation.

To the pipe 16 it is integrally coupled a ferrule 19, with a threaded cylindrical inner portion 20, to which the threaded rod 13 is screwed. In this way, the rotation imparted to the pipe 16 is transmitted to the ferrule 19, which, by rotating around the threaded rod 13, moves by shifting in the vertical direction, dragging with it the entire rack 5'.

The ferrule 19 includes two axial roller bearings, respectively an upper bearing 21 and a lower bearing 22, with housing cage, facing each other and supported, with possibility of rotation, on a crown 23, interposed between said bearings 21, 22 and integrally coupled to the lower base 24 of the rack 5'. Depending on if the rack 5 is dragged upwards or downwards, on the crown 23 will respectively slide the lower bearing 22 or the upper bearing 21.

To facilitate the operations of coupling and uncoupling between the threaded cylindrical inner portion 20 and the threaded rod 13, the portion 25 of the ferrule 19 underlying the inner portion 20 has a frusto-conical shape.

The pipe 16 is further provided with a locking device 26 with system for regulating the clamping force, to ensure the watertight closure of the lid 7 with the outer container 1, with the necessary pressure setting determined in the design phase.

The locking device 26 is constituted by a crown 27, integrally coupled to the upper end of the pipe 16, and provided with three threaded inserts 28, arranged at 120° apart from each other on a plane perpendicular to the axis of the threaded rod 13.

The threaded inserts 28 penetrate inside the pipe 16, through holes. Each threaded insert 28 is provided with a seat 29 for housing a spring 30, which acts in compression by pushing a ball 31, projecting at each end of threaded insert 28.

On the threaded rod 13 are correspondingly arranged the housings 32 for each of said balls 31.

When the three balls 31 occupy the three corresponding housing seatings 32, the closing operation ends, with the certainty that it is reached the setting pressure determined in the design phase.

The extremity of the pressure calibration is performed at the design stage and represents a value X of the torque of screwing, in kg·m, required for the street pullout cabinet, closed, to be completely sealed under a head of water established in meters Y.

Testing of all street pullout cabinet according to the present invention is performed by calibrating the value X of the torque of screwing, in the following manner: the cabinet is closed until the locking device 26 intervenes; from the outside of the base 15 of the outer container is applied, on a threaded pin 21 of the adjustable bayonet connector 14, a draw of the automated moving system with a torque determined by a torque wrench regulated to the value X.

The operation of the automated handling system is the following: with the rotation of the pipe 16, conventionally in the counterclockwise direction, it is possible to raise the rack 5' up to the height above ground.

Continuing the rotation, the ferrules 19 and the pipe 16 with it are disengaged from the threaded rod 13 and can lift the rack 5', placing it on the street surface for easier processing of maintenance and/or first installation.

At this point, for convenient access to the inside of the outer container 1, it is possible to extract the threaded rod 13 from the container 1, by rotating the upper end to disengage the bayonet coupling 14 on the bottom.

When done, the threaded rod 13 is engaged again and the rack 5' is relocated at its sliding seat inside the container 1.

With the first rotation of the pipe 16, conventionally in a clockwise direction, the rack 5 is linked up again with the threaded rod 13.

As the rotation of the pipe 16 in the same direction will lower the rack 5' in its place of rest until the locking system 26 intervenes to set pressure. At this point the street pullout cabinet according to the present invention is watertight closed.

The street pullout cabinet according to the present invention completely passively dissipate the heat generated by the equipment it contains. Therefore, the street pullout cabinet according to the present invention is lacking any fan or moving cooling components. Compared to street cabinets according to the prior art, the pullout street cabinet according to the present invention has the advantage of not being subject to solar radiation, avoiding the need to use the so-called "apron", a housing cover provided with openings for the circulation of air used for street cabinets arranged outside according to the prior art.

The sizing of the pullout street cabinet according to the present invention must take into account mainly the size of the rack 5 contained inside, as well as the demands of the heat developed by the equipment contained in it.

In particular, the sizing of the cooling panels 3 depends on the material with which they are made, as well as by the size of the cabinet, or on the space available for the placement of the cooling panels 3 themselves. Referring to the solution shown with reference to the attached figures, in which there are six cooling panels 3, arranged in number of two on each of the sides of the cabinet with a larger size and in number of one on each of the sides of the cabinet with a smaller size, the heat dissipation can be determined according to the following calculations, in which are given the following features: W = width of each panel = 0.130 m,
Hpr = height of each panel = 1.200 m;
Npr = number of panels = 6;
Na = number of fins of each panel = 10;
Aa = height of the fins = 0.083 m.

Considering the dissipating surface of each fin equal to its lateral surface, ie equal to twice the surface area calculated by multiplying the height of each fin Aa for its length, which is equal to the height of the cooling panel Hpr; multiplying the area obtained by the number of fins Na of each cooling panel 3 and by the total number of cooling panels Npr, the total area of dissipation of the pullout street cabinet according to the present invention, indicated by Sd, is equal to:
Sd = 2 x Aa x Hpr x Na x Npr
=2 x 0.083 x 1.2 x 10 x 6 = 11.95 m²

Therefore, considering a coefficient of dissipation efficiency equal to 80%, it has an effective dissipating surface that amount to
Sde = 11.95 x 0.80 = 9.56 m²

Considering the heat exchange coefficient of a ground of saturated sandy type equal to
η = 90 W/m²
the drawing power of the ground is equal to
Wter = η x Sde = 90 x 11,95 = 1075 W.

Additionally, considering the heat transfer coefficient of the aluminum (of which the cooling panels 3 are made), equal to
K = 6.27 W/m² °C,
the dissipating power Wd per °C of Sde, is equal to
Wd = 6.27 x 9.56 = 59.94 W/°C.

The increase of temperature for the dissipated power of the aluminum is equal to
T = 1075: 59.94 = 17.93 °C.

Given the maximum external temperature of 45 °C and that of the ground at a depth of 1.5 m equal to 43.5 °C, the internal temperature Ti of the pullout street cabinet according to the present invention is equal to Ti = 43.5 + 17.93 = 61.43 °C

The value Ti is therefore less than 65 °C (maximum temperature for a correct operation of the equipment), therefore it is ammissible.

The advantages of the pullout street cabinet according to the present invention are evident, since it has a high passive dissipation of energy (1075W), by virtue of its placement in the ground.

Moreover, the pullout street cabinet according to the present invention occupies a very reduced space on the surface, being the rack 5 contained therein arranged in a vertical position, and not requiring the construction of the so-called small room for its housing, because buried directly in the ground.

Also, the location of installation of the pullout street cabinet according to the present invention is always possible, because the space occupied on the surface is only that of the manhole of reduced size.

In the embodiment described with reference to Figures 7 and 8, moreover, the pullout street cabinet according to the present invention further presents the following features: the automatable opening and closing, ease of insertion and disconnection of the rack in its seat, maneuverability of the threaded rod with bayonet-closure control designed for a perfect seal, no substantial degradation of the article over time, since all the functional parts are inside the pullout street cabinet.

The present invention has been described for illustrative but not limitative purposes according to its preferred embodiments, but it is to be understood that variations and/or modifications can be made by those skilled in the art without departing from the related scope of protection, as defined by the appended claims.

## Claims

1. Pullout street cabinet comprising an outer container (1) adapted to be interred, provided with openings (2) and with a lid (7, 7'), which closes the upper portion of said outer container (1), inside said outer container (1) being housed one or more functional apparatuses, together with their power supply accessories, which are arranged on a pullout structure (5, 5') by sliding through said upper portion.

2. Pullout street cabinet according to claim 1, **characterised in that** said pullout structure is integral with said lid (7, 7').

3. Pullout street cabinet according to claim 1 or 2, **characterised in that** it comprises a limit switch mechanism of said pullout structure (5).

4. Pullout street cabinet according to any one of the preceding claims, **characterised in that** on the outer surface of said outer container (1), it is present at least one outer section bar (4), arranged perpendicular to the direction of the buoyant force exerted on said outer container (1) by a fluid that may occupy the space surrounding said outer container (1).

5. Pullout street cabinet according to any one of the preceding claims, **characterised in that** said lid (7, 7') has a hydraulic seal, arranged in correspondence of the upper peripheral edge of said outer container (1).

6. Pullout street cabinet according to any one of the preceding claims, **characterised in that** it comprises a surrounding bead (10) placed on the top of said outer container (1) and above which is arranged a manhole (11).

7. Pullout street cabinet according to any one of the preceding claims, **characterised in that** said pullout structure is a rack (5, 5') for housing telephone transmission equipment.

8. Pullout street cabinet according to any one of the preceding claims, **characterised in that** said openings (2) are arranged in the lower part of said outer container (1).

9. Pullout street cabinet according to claim 8, **characterised in that** said pullout structure (5, 5') has a height lower than that of the outer container (1), leaving a free space on the bottom of said outer container (1).

10. Pullout street cabinet according to any one of the preceding claims, **characterised in that** on the outer surface of said outer container (1) are arranged a plurality of cooling panels (3) by thermal dissipation.

11. Pullout street cabinet according to any one of the claims 1-2, 4-10, **characterised in that** it comprises an automated handling system, comprising a threaded rod (13) arranged vertically in the center of said outer container (1) and coupled to the center of a base (15) of said outer container (1), an internally threaded ferrule (19), disposed at the center of a base (24) of said pullout structure (5') and coupled to said base with possibility of rotation, and a pipe (16), integral with said ferrule (19) and inside which it is defined a seat for housing said threaded rod (13), said pipe (16) being coupled, with possibility of rotation, to said lid (7') and being integral with an extremity (18), arranged externally to said lid (7').

12. Pullout street cabinet according to claim 11, **characterised in that** it comprises a locking device (26), integral with said pipe (16), and provided with a plurality of mechanical spring elements coupled to the corresponding seats of said threaded rod (13).
